# FASCICULE DE BREVET EUROPEEN

(11) **EP 3 651 688 B1**
(45) Date de publication et mention de la délivrance du brevet: **14.04.2021**
(21) Numéro de dépôt: 18742754.7
(22) Date de dépôt: 12.07.2018
(51) Int. Cl.: A61C 13/271, A61C 13/265, A61C 13/275

(54) **DISPOSITIF DE REMPLACEMENT D'UNE DENT MANQUANTE**
VORRICHTUNG ZUM ERSETZEN EINES FEHLENDEN ZAHNS
DEVICE FOR REPLACING A MISSING TOOTH

(30) Priorité: 13.07.2017 FR 1770758
(43) Date de publication de la demande: 20.05.2020
(73) Titulaire: Delprat, Jean-David, 06200 Nice (FR)
(72) Inventeur: Delprat, Jean-David, 06200 Nice (FR)
(74) Mandataire: Decobert, Jean-Pascal
(86) Numéro de dépôt international: PCT/EP2018/068988
(87) Numéro de publication internationale: WO 2019/012057

(56) Documents cités:
- KR-A- 20110 124 438
- US-A- 1 211 494
- US-A- 2 411 001
- US-A- 4 547 159
- US-A- 4 950 162

## Description

### DOMAINE DE L'INVENTION

Le domaine technique de l'invention s'inscrit dans le domaine du remplacement de dents, de préférence chez l'être humain, et concerne notamment la catégorie : « PROTHESE DENTAIRE ».

### ARRIERE-PLAN TECHNOLOGIQUE

On rencontre actuellement, dans l'état de la technique, différents problèmes techniques. En particulier, pour réaliser actuellement une ou plusieurs dents manquantes (c'est-à-dire pour remplacer une ou plusieurs dents naturelles par un dispositif prothétique du type dent(s) artificielle(s), il faut soit :
- Réaliser un bridge ;
- Faire appel à l'implantologie ;
- Réaliser un appareil dentaire amovible

Le document US 1 211 494 A, décrit par exemple un dispositif de fixation pour un bridge avec une pièce femelle et une pièce mâle qui, lorsqu'elles sont assemblées forment une poutre, lesdites pièces femelles et mâles étant munies chacune d'une partie d'ancrage destinées à coopérer avec des cannelures réalisées dans des dents naturelles, ladite poutre servant de support à une pièce de substitution destinée à remplacer la ou les dents manquantes.

Le dispositif selon l'invention permet de remédier aux inconvénients suivants des techniques existantes :

### 1 la réalisation d'un bridge :

Nous éviterons de mutiler en les taillant, les couronnant et en les recouvrant de toutes les manières possibles pour l'homme de l'art deux dents saines.

### 2 La mise en place d'implants :

Nous éviterons d'intervenir avec une chirurgie invasive pour remplacer une ou plusieurs dents manquantes.

### 3 La réalisation d'un appareil amovible :

Nous éviterons d'avoir une prothèse non fixée.

### RESUME DE L'INVENTION

L'objet de la présente invention est un dispositif permettant de remplacer une dent manquante, voire des dents manquantes caractérisé en ce qu'il comprend une pièce femelle et une pièce mâle qui, lorsqu'elles sont assemblées, forment une poutre, lesdites pièces femelle et mâle étant munies chacune d'une partie d'ancrage, les parties d'ancrage étant destinées à coopérer avec des cannelures réalisées dans des dents naturelles supports adjacentes, ladite poutre servant de support à une pièce de substitution destinée à remplacer la ou les dents manquantes, dispositif dans lequel la pièce femelle comporte une section de forme tubulaire formant la partie d'ancrage et destinée à se placer dans une cannelure de l'une des dents naturelles supports adjacentes, deux ailettes destinées à épouser de part et d'autre la morphologie et la convexité de la dent support, une partie de poutre munie d'une butée en forme de biseau et d'une découpe en forme de gâche réalisée sur une moitié supérieure de la partie de poutre.

Ainsi le dispositif permettant de remplacer une dent manquante, voire des dents manquantes, comprend une pièce femelle et une pièce mâle comportant chacune une section de forme tubulaire, ces deux pièces une fois assemblées formant une poutre. Lesdites pièces femelles et mâles sont munies chacune d'une partie d'ancrage destinée à coopérer avec des cannelures réalisées dans des dents naturelles supports adjacentes. Des ailettes viennent épouser l'anatomie et la courbure de la dent support. La poutre de forme rectangulaire constitue relie la partie mâle et la partie femelle formant un ensemble sur lequel se fixe la dent de substitution.

L'invention définit donc un système qui permet de relier deux dents entre elles par le biais d'une poutre avec une partie mâle et une partie femelle. Ces deux pièces sont réalisées en un matériau appelé « Zircone » ou équivalent existant ou à venir.

Dans un premier temps, le praticien dentiste devra effectuer deux « cannelures » ou « slices cut » sur les deux dents adjacentes à la dent ou aux dents manquantes, en s'aidant le cas échéant d'un procédé d'immersion virtuelle. Ainsi, la précision de la zone de fraisage sera assurée dans son axe, sa position et sa profondeur.

Dans un second temps, l'empreinte devra être réalisée au moyen de la technique appelée « prise d'empreintes optique » et utilisant une caméra buccale. L'empreinte sera ensuite transmise au centre de fabrication pour usinage des parties mâle et femelle et de la ou des dents manquantes.

Dans un troisième temps, à réception de la prothèse, le praticien dentiste devra assembler et fixer la « Passerelle » ou « Gateway » selon le protocole établi :
- La partie femelle est positionnée la première dans sa dent support et s'intègre à la cannelure ou « slice cut » précitée ;
- La partie mâle s'ancre à la fois dans la partie femelle (jouant le rôle de guide) et dans la deuxième dent support ou une « cannelure » ou « slice cut » qui a été également réalisée ;

Sur cette poutre ainsi formée, viendra se placer une couronne à la manière d'un sertissage ;Cet ensemble ainsi constitué permet de recréer la dent manquante.

Un autre aspect de le présente description est relatif à un procédé de réalisation d'un dispositif selon l'invention. Avantageusement, ce procédé comprend au moins l'une des étapes suivantes :
- formation d'une première cannelure dans une première dent support adjacente à une zone de placement du dispositif en remplacement d'au moins une dent manquante ; de préférence, la première cannelure est disposée sur le côté de la première dent support contiguë à la zone de placement du dispositif ;
- formation d'une deuxième cannelure dans une deuxième dent support adjacente à une zone de placement des dispositifs ; de préférence, la deuxième cannelure est disposée sur le côté de la deuxième dent support contiguë à la zone de placement du dispositif, la première cannelure et la deuxième cannelure se faisant face ; de préférence, la première cannelure et la deuxième cannelure sont dirigées selon des axes longitudinaux parallèles ;
- assemblage de la première pièce (partie femelle) avec l'une parmi la première dent support et la deuxième dent support, comprenant une insertion de la forme tubulaire de la première pièce dans la cannelure de la dent support correspondant ;
- assemblage de la deuxième pièce (partie mâle) avec l'autre parmi la première dent support la deuxième dent support, comprenant une insertion de la forme tubulaire de la deuxième pièce dans la cannelure de la dent support correspondante ;
- assemblage de la première pièce et de la deuxième pièce de sorte à former une poutre s'étendant suivant une direction longitudinale de la zone de placement, entre les deux dents support ;
- mise en place d'une pièce de remplacement de la au moins une dent manquante solidarisée avec la poutre.

### BREVE DESCRIPTION DES FIGURES

D'autres caractéristiques, buts et avantages de la présente invention apparaitront à la lecture de la description détaillée qui suit, en regard des dessins annexés, donnés à titre d'exemples, non limitatifs.

Les cinq dessins annexés illustrent l'invention :
- La figure 1 représente la partie femelle de l'invention ;
- La figure 2 représente la partie mâle de l'invention ;
- La figure 3 représente l'assemblage de la partie femelle et de la partie mâle de l'invention ;
- La figure 4 représente la dent manquante de l'invention ;
- La figure 5 représente le dispositif assemblé de l'invention appelé « Passerelle » ou « Gateway ».

### DESCRIPTION DETAILLEE

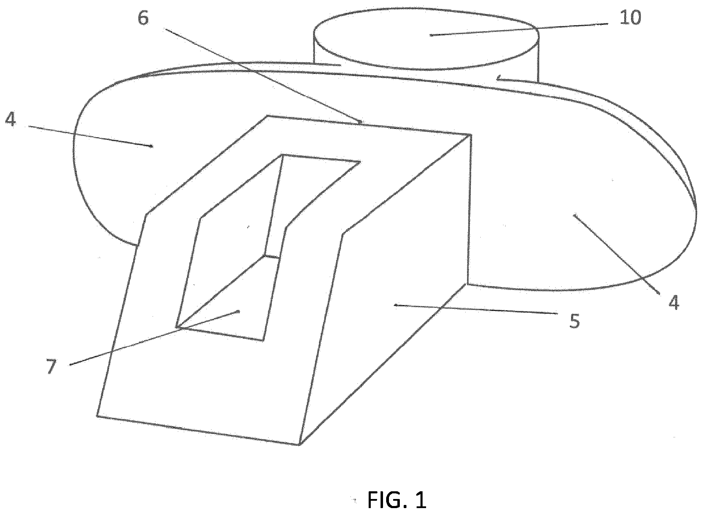

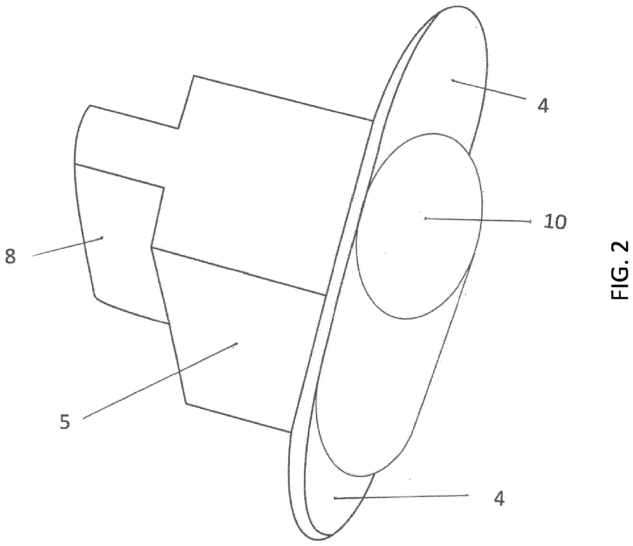

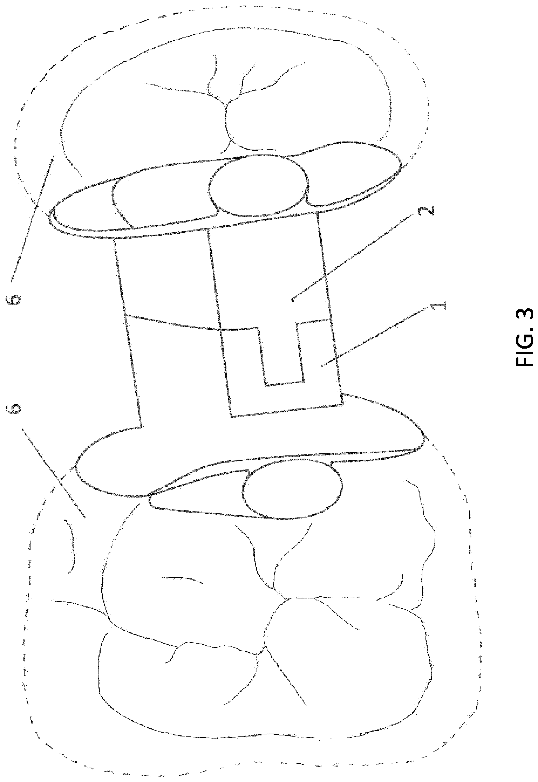

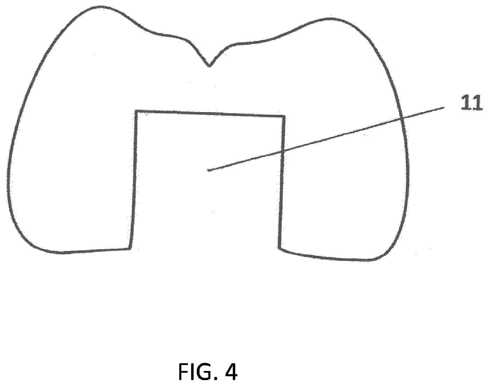

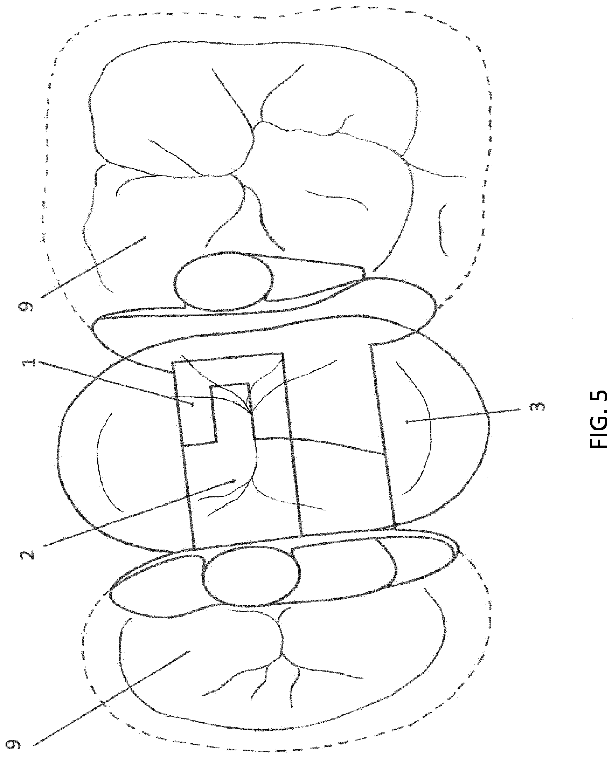

Avant d'entrer dans le détail de modes de réalisation de l'invention en référence aux dessins notamment, on fournit ci-après des indications non limitatives sur des aspects que l'invention peut comprendre individuellement ou selon toutes combinaisons entre eux :
- l'invention comprend un système de poutre et d'ancrage instauré aux fins de pallier l'absence d'une dent comprenant une pièce femelle (Figure 1) et mâle (Figure 2) ancrées dans les dents adjacentes ; ces dernières son préalablement adaptées par un procédé de « cannelures (Figure 1 - numéro 1 et Figure 2 - numéro 1) » ou « slices cut », peu invasif, sur cette poutre ainsi formée (Figure 3) vient s'imbriquer une couronne en Zircone (Figure 4) ou autre matériau apparenté, et offrant des qualités optiques et mécaniques comparables hors métal.
- Optionnellement, toutes les pièces seront réalisées sur mesure à l'aide de logiciels de calculs, scanners et usineuses.
- L'invention peut comprendre une empreinte qui devra être réalisée au moyen d'une caméra buccale ou d'un procédé équivalent.
- L'interaction de la conception de la « Passerelle (figure 5) ou « Gateway » nécessitera l'utilisation d'un dispositif d'immersion virtuelle existant ou à venir pour obtenir le résultat convenu.
- Le guidage du geste du praticien dans la bouche du patient, assisté par tout dispositif d'immersion virtuelle existant ou à venir, pour effectuer les « cannelures (Figure 1 - numéro 1 et Figure 2 - numéro 1)» ou « slices cut » dans les dents supports, pour respecter les axes, les profondeurs et les volumes requis, est également possible.
- La taille des pièces de la « Passerelle » ou « Gateway (Figure 5)», sera éventuellement variable en fonction de l'écart entre les dents supports, ainsi que de leurs morphologies intrinsèques.
- De légères modifications peuvent être apportées sur la poutre (Figure 3), les modifications peuvent être de petites « rainures » additionnelles pour augmenter la tenue et la friction de la dent manquante (Figure 4), ainsi qu'une courbure de la poutre si nécessaire.
- Il est possible, dans le cas d'un implant déjà posé, que la « Passerelle (Figure 5) » ou « Gateway (Figure 5) » puisse venir en support à ladite pièce implantaire.
- Il est possible que les parties femelle (Figure 1) et mâle (Figure 2) puissent faire partie intégrante d'une couronne ou d'un bridge, c'est à dire qu'elles puissent être fusionnées à une couronne seule ou à une couronne faisant partie d'un bridge.
- Éventuellement, le développement d'un logiciel informatique qui soutient la réalisation des pièces quelle que soit la revendication, est envisageable.
- La pièce femelle comporte avantageusement une section de forme tubulaire 10 formant la partie d'ancrage destinée à se placer dans la cannelure réalisée dans la dent naturelle de support adjacente, deux ailettes 4 réalisées sur mesure destinées à épouser de part et d'autre la morphologie et la convexité de la dent support, une poutre 5 munie d'une butée en forme de biseau et d'une découpe en forme de gâche 7 réalisée sur la moitié supérieure de la poutre 5.
- La pièce mâle 2 comprend avantageusement une section de forme tubulaire 10 formant la partie d'ancrage destinée à se placer dans une cannelure réalisée dans l'autre dent support adjacente, deux ailettes 4 réalisées sur mesure destinées à épouser de part et d'autre la morphologie et la convexité de l'autre dent support adjacente, et une poutre 5 munie d'un biseau destiné à s'appuyer sur le biseau de la pièce femelle ainsi que d'une avancée en forme de pêne 8 destinée à entrer dans la gâche de la partie femelle après assemblage.
- Les poutres ont de préférence une forme rectangulaire et sont en décalage en forme de marche par rapport à la section tubulaire.
- On réalise, de préférence, une conception sur mesure prenant la forme d'une couronne ou d'un bridge dont l'intrados destiné à coiffer la poutre s'emboite et se fixe sur ladite poutre.
- La pièce femelle comporte de préférence une section de forme tubulaire 10 formant la partie d'ancrage destinée à se placer dans la cannelure réalisée dans la dent naturelle de support adjacente, deux ailettes 4 réalisées sur mesure destinées à épouser de part et d'autre la morphologie et la convexité de la dent support, une poutre 5 munie d'une butée en forme de biseau et d'une découpe en forme de gâche 7 réalisée sur la moitié supérieure de la poutre 5.
- La pièce mâle 2 comprend de préférence une section de forme tubulaire 10 formant la partie d'ancrage destinée à se placer dans une cannelure réalisée dans l'autre dent support adjacente, deux ailettes 4 réalisées sur mesure destinées à épouser de part et d'autre la morphologie et la convexité de l'autre dent support adjacente, et une poutre 5 munie d'un biseau destiné à s'appuyer sur le biseau de la pièce femelle ainsi que d'une avancée en forme de pêne 8 destinée à entrer dans la gâche de la partie femelle après assemblage.
- Les poutres ont avantageusement une forme rectangulaire et sont avantageusement en décalage en forme de marche par rapport à la section tubulaire.
- La pièce destinée à remplacer la dent manquante se présente de préférence sous forme d'une couronne ou d'un bridge et est de préférence munie d'un intrados destiné à coiffer la poutre et être fixé par collage sur ladite poutre.
- Il s'agit de préférence d'une conception sur mesure prenant la forme d'une couronne ou d'un bridge dont l'intrados destiné à coiffer la poutre s'emboite et se fixe sur ladite poutre.

D'une manière générale, grâce à la présente invention il est permis de créer une ou plusieurs dents artificielles à la place de, respectivement, une ou plusieurs dents naturelles manquantes. Dans la présente demande, le terme dent(s) manquante(s) correspond à la (ou les) dent naturelle d'origine ou à celle, artificielle, donnant lieu au travail de réalisation de prothèse, également appelée dent de substitution.

De manière avantageuse, le dispositif de l'invention emploie le soutien mécanique de deux dents support, l'une distale et l'autre mésiale relativement à la partie avant du maxillaire considéré, les dents support étant espacées par une zone interstitielle dans laquelle la reconstruction prothétique est à réaliser.

En référence à ces dessins le dispositif de l'invention se présente ainsi :

### I. Description de la première pièce (partie femelle) - Figure 1

- Une section de cette pièce de forme tubulaire 10 se place à l'intérieur d'une petite cannelure ou « slice cut », pratiquée dans la première dent naturelle support.
Cette cannelure peu invasive se prolonge sur la hauteur de la couronne de ladite dent support.
Avantageusement, la cannelure et la forme tubulaire 10 coopèrent sous forme d'une glissière à éléments male/femelle, la direction de la glissière étant de préférence dirigée suivant une dimension en hauteur de la dent support. De préférence, la section transversale de la cannelure est semblable à celle de la forme tubulaire 10. De préférence, cette section transversale de forme tubulaire présente un contour fermé arrondi typiquement ovoïde, notamment du type elliptique.
- Deux ailettes 4 épousent, de part et d'autre, toute la morphologie et la convexité de la dent support, coté dent manquante ; un premier blocage est ainsi constitué de par l'intégration de la forme tubulaire, encore appelée tubulure, dans la dent support et des ailettes appliquées sur la partie distale. Cannelures et ailettes sont également avantageusement collées à la dent support.
- Une partie de poutre 5, de préférence de forme rectangulaire, s'avance sur la zone de la dent manquante ; elle est de préférence en décalage en forme de marche 6 avec la section tubulaire ; sa hauteur, suivant la dimension en hauteur des dents, est donc de préférence inférieure à celle de la forme tubulaire 10 ; elle comprend en butée une forme en biseau à la manière d'une clé ; avantageusement, ce biseau forme un pan incliné à une extrémité libre de la poutre ;
cette partie inclut également une partie en creux, avantageusement présente sur sa moitié supérieure et de préférence sous forme d'une découpe en forme de gâche (7)

### II. Description de la seconde pièce (partie mâle) - Figure 2

- Une section de cette pièce de forme tubulaire 10 se place à l'intérieur d'une petite « cannelure » ou « slice cut », pratiquée dans la seconde dent naturelle support. Cette « cannelure » ou « slice cut », peu invasive se prolonge sur la hauteur de la couronne de ladite dent support. Suivant un mode de réalisation, on peut utiliser les enseignements indiqués précédemment pour la forme tubulaire de la première pièce dans le contexte de la forme tubulaire de la deuxième pièce. Il en est de même pour les ailettes qui suivent.
- Deux ailettes (4) épousent de part et d'autre la morphologie et la convexité de la dent support, côté dent manquante ; un autre blocage est ainsi constitué de par l'intégration de la tubulure dans la dent support et des ailettes appliquées sur la partie mésiale. Cannelures et ailettes sont également avantageusement collées à la dent support.
- Une partie de poutre (5), (de préférence elle-même en décalage en forme de marche avec la section tubulaire) de forme avantageusement rectangulaire s'avance pour s'enclencher dans la partie femelle, le biseau vient s'appuyer contre celui de la partie femelle, c'est-à-dire au moins au niveau de la poutre de la première pièce ; et une avancée en forme de pêne (8) entre dans la gâche de la partie femelle afin de ne former qu'une seule pièce. On comprend que la partie de poutre de la première pièce et la partie de poutre de la deuxième pièce présentent des formes configurées pour coopérer suivant un assemblage mâle femelle pour former la poutre globale; lorsque des biseaux sont présents, ils sont également configurés pour coopérer de sorte à s'appliquer surface sur surface, de préférence plan sur plan.

De préférence, la poutre d'au moins l'une des première et deuxième pièces est dirigée perpendiculairement à l'axe longitudinal de la forme tubulaire correspondante. De préférence, la direction d'insertion de la partie en forme de pêne relativement à la partie en forme de gâche est parallèle à l'axe longitudinal des formes tubulaires.

Avantageusement, chacune de la première pièce et de la deuxième pièce est monobloc et de préférence venue d'une seule matière.

Les ailettes d'au moins une parmi la pièce mâle et la pièce femelle peuvent être réalisées sur mesure.

Le mode de réalisation illustré emploie un système cannelure/forme tubulaire. Il n'est pas exclu qu'au moins une dent support comporte plusieurs cannelures et que, en correspondance, l'une des pièces 1, 2 comporte plusieurs formes tubulaires.

Par ailleurs, la forme tubulaire s'entend d'un élément de section circulaire ou ovoïde transversalement à une direction longitudinale de préférence orientée selon la hauteur de la denture. De préférence, la plus grande dimension de la section ovoïde est selon un axe perpendiculaire à celui de la poutre. Par ailleurs, suivant sa direction longitudinale, la forme tubulaire peut être cylindrique (sa directrice est parallèle à la direction longitudinale) ou être évasée vers le haut, telle un tronc de cône. Avantageusement aplati, le tronc de cône correspondant peut avoir une inclinaison comprise entre 15° et 45° relativement à la direction longitudinale de la forme tubulaire, et par exemple de 25° à 35°. Ces exemples ne sont pas limitatifs.

### III. Description de l'assemblage de la partie femelle et de la partie mâle - Figure 3

- Les parties femelle (1) et mâle (2) sont emboitées l'une dans l'autre et chaque coté est également bloqué de part et d'autre dans les dents supports (9).
- Sur la figure 3, comme sur la figure 5, la poutre est présentée légèrement en perspective de sorte à visualiser un flanc vertical de celle-ci.

### IV. Description de la dent manquante (ou pièce prothétique ou dent de

### substitution) - Figure 4

- La dent de substitution 3 comprend dans son intrados 11 une découpe correspondant au volume de la poutre. Cet intrados 11 est destiné à coiffer ladite poutre et participe au sertissage de l'ensemble. Elle est elle-même de préférence collée à la poutre.
La dent manquante doit pour l'homme de l'art s'intégrer à la morphologie de la bouche du patient et répondre à tous les paramètres en vigueur.
L'illustration de la figure 5 est faite en référence à une pièce prothétique correspondant à une seule dent manquante ; comme indiqué précédemment, la pièce prothétique peut correspondre à plusieurs dents manquantes juxtaposées.

### V. Description du dispositif assemblé : « Passerelle ou Gateway » - Figure 5

- La figure 5 représente le dispositif assemblé de l'invention appelé « Passerelle » ou « Gateway ».
- L'ensemble partie femelle (1) et partie mâle (2) est lui-même coiffé et serti par la dent manquante (3) ; les trois parties ne forment plus qu'un seul bloc.

Le dispositif selon l'invention de par les matériaux employés (Zircone ou tout matériau équivalent ou à venir) est particulièrement adapté aux méthodes de C.A.O (conception assistée par ordinateur) et CFAO (conception fabrication assistée par ordinateur) faisant appel à des outils tels que : scanner ; logiciel de conception ; usineuse ; technique de prise d'empreintes avec caméra optique et de tout procédé d'immersion virtuelle.

En conclusion, nous rappelons que l'invention appelée « Passerelle » ou « Gateway », s'inscrit dans le domaine de la prothèse dentaire fixée. L'invention concerne un dispositif qui permet de remplacer une dent manquante 3, voire des dents manquantes. Elle comprend une partie femelle 1, une partie male 2 et une pièce représentant la ou les dent(s) manquante(s) 3. La partie femelle et la partie mâle s'ancrent de manière peu invasive dans les dents supports (9). Assemblées, elles forment alors une poutre. La dent manquante, réalisée elle aussi en zircone ou en tout autre matériau apparenté (hors métal), coiffe cette poutre (devenue invisible) et l'assemblage ainsi constitué forme un système autobloquant. Les rainures incluses dans les dents adjacentes et les ailettes participent au ceinturage de ces dernières et évitent tout mouvement. La dent manquante vient à son tour sertir la poutre et s'intègre également dans les butées des marches (6) des parties femelles et mâles.

### REFERENCES

- 1.: Pièce femelle
- 2.: Pièce mâle
- 3.: Dent de substitution
- 4.: Ailette
- 5.: Poutre
- 6.: Marche
- 7.: Découpe en forme de gâche
- 8.: Pêne
- 9.: Dent support adjacente
- 10.: Forme tubulaire
- 11.: Intrados

## Revendications

1. Dispositif permettant de remplacer une dent manquante, voire des dents manquantes **caractérisé en ce qu'**il comprend une pièce femelle (1) et une pièce mâle (2) qui, lorsqu'elles sont assemblées, forment une poutre, lesdites pièces femelle et mâle (1, 2) étant munies chacune d'une partie d'ancrage, les parties d'ancrage étant destinées à coopérer avec des cannelures réalisées dans des dents naturelles supports adjacentes, ladite poutre servant de support à une pièce de substitution (3) destinée à remplacer la ou les dents manquantes, dispositif dans lequel la pièce femelle (1) comporte une section de forme tubulaire (10) formant la partie d'ancrage et destinée à se placer dans une cannelure de l'une des dents naturelles supports adjacentes, deux ailettes (4) destinées à épouser de part et d'autre la morphologie et la convexité de la dent support, une partie de poutre (5) munie d'une butée en forme de biseau et d'une découpe en forme de gâche (7) réalisée sur une moitié supérieure de la partie de poutre (5).

2. Dispositif selon la revendication 1, dans lequel la pièce mâle (2) comprend une section de forme tubulaire (10) formant la partie d'ancrage et destinée à se placer dans une cannelure réalisée dans l'autre des dents supports adjacentes, deux ailettes (4) destinées à épouser de part et d'autre la morphologie et la convexité de l'autre des dents supports adjacentes, et une poutre (5) munie d'un biseau destiné à s'appuyer sur le biseau de la pièce femelle (1) ainsi que d'une avancée en forme de pêne (8) destinée à entrer dans la découpe en forme de gâche (7) de la partie femelle (1) après assemblage.

3. Dispositif selon l'une quelconque des revendications précédentes, dans lequel les partie de poutre ont une forme rectangulaire et sont en décalage en forme de marche par rapport à la section tubulaire.

4. Dispositif selon l'une quelconque des revendications précédentes **caractérisé en ce que** la pièce de substitution (3) destinée à remplacer la dent manquante se présente sous forme d'une couronne ou d'un bridge et est munie d'un intrados configuré pour coiffer la poutre et est fixé par collage sur ladite poutre.

## Patentansprüche

1. Vorrichtung, die gestattet, einen fehlenden Zahn, sogar fehlende Zähne zu ersetzen, **dadurch gekennzeichnet, dass** sie ein weibliches Teil (1) und ein männliches Teil (2) umfasst, die, wenn sie verbunden sind, einen Balken bilden, wobei das weibliche und männliche Teil (1, 2) jeweils mit einem Verankerungsabschnitt ausgestattet sind, wobei die Verankerungsabschnitte zum Zusammenwirken mit in benachbarten natürlichen Trägerzähnen hergestellten Rillen vorgesehen sind, wobei der Balken als Träger für ein Ersatzteil (3) ist, das zum Ersetzen des oder der fehlenden Zähne bestimmt ist, wobei das weibliche Teil (1) der Vorrichtung einen rohrförmigen Querschnitt (10) aufweist, der den Verankerungsabschnitt bildet und bestimmt ist, sich in einer Rille von einem der benachbarten natürlichen Trägerzähne zu platzieren, zwei Flügel (4), die bestimmt sind, auf der einen und der anderen Seite der Morphologie und der Konvexität des Trägerzahns zu folgen, einen Balkenabschnitt (5), der mit einem abgeschrägten Anschlag und einem schließblechartigen Ausschnitt (7) ausgestattet ist, der auf einer oberen Hälfte des Balkenabschnitts (5) hergestellt ist.

2. Vorrichtung nach Anspruch 1, wobei das männliche Teil (2) einen rohrförmigen Querschnitt (10) aufweist, der den Verankerungsabschnitt bildet und bestimmt ist, sich in einer Rille zu platzieren, die im anderen der benachbarten Trägerzähne hergestellt ist, zwei Flügel (4), die bestimmt sind, auf der einen und der anderen Seite der Morphologie und der Konvexität des anderen der benachbarten Trägerzähne zu folgen, und einen mit einer Schräge ausgestatteten Balken (5), der bestimmt ist, sich auf der Schräge des weiblichen Teils (1) abzustützen sowie einen Vorsprung in Form eines Riegels (8), der bestimmt ist, nach dem Verbinden in den schließblechartigen Ausschnitt (7) des weiblichen Abschnitts (1) einzutreten.

3. Vorrichtung nach einem der vorangehenden Ansprüche, wobei die Balkenabschnitte eine rechteckige Form haben und in Bezug auf den rohrförmigen Querschnitt treppenförmig versetzt sind.

4. Vorrichtung nach einem der vorangehenden Ansprüche, **dadurch gekennzeichnet, dass** das Ersatzteil (3), das zum Ersetzen des fehlenden Zahns bestimmt ist, in Form einer Krone oder einer Brücke vorliegt und mit einer Laibung ausgestattet ist, die ausgelegt ist, um den Balken zu bedecken und durch Kleben auf dem Balken befestigt ist.

## Claims

1. Device for replacing a missing tooth, or missing teeth, **characterised in that** it comprises a female part (1) and a male part (2), which, when they are assembled, form a strut, said female and male parts (1, 2) being each provided with an anchoring portion, the anchoring portions being intended to cooperate with grooves produced in adjacent supporting natural teeth, said strut serving as a support for a substitution part (3) intended to replace the missing tooth or teeth, device wherein the female part (1) includes a tubular-shaped cross-section (10) forming the anchoring portion and intended to be placed in a groove of one of the adjacent supporting natural teeth, two fins (4) intended to mould on either side the morphology and the convexity of the supporting tooth, a strut portion (5) provided with a bevel-shaped abutment and a notch-shaped cut area (7) produced on an upper half of the strut portion (5).

2. Device according to claim 1, wherein the male part (2) comprises a tubular-shaped cross-section (10) forming the anchoring portion and intended to be placed in a groove of the other of the adjacent supporting natural teeth, two fins (4) intended to mould on either side the morphology and the convexity of the other of the adjacent supporting natural teeth, and a strut (5) provided with a bevel intended to bear on the bevel of the female part (1) as well as a bolt-shaped protuberance (8) intended to enter the notch-shaped cut area (7) of the female part (1) after assembly.

3. Device according to any one of the preceding claims, wherein the strut portions have a rectangular shape and are at a step-shaped offset with respect to the tubular cross-section.

4. Device according to any one of the preceding claims **characterised in that** the substitution part (3) intended to replace the missing tooth is in the form of a crown or a bridge and is provided with a basal surface configured to cover the strut and is attached by bonding onto said strut.
